# EUROPÄISCHE PATENTSCHRIFT

(11) **EP 3 373 782 B1**
(45) Veröffentlichungstag und Bekanntmachung des Hinweises auf die Patenterteilung: **22.09.2021**
(21) Anmeldenummer: 16798111.7
(22) Anmeldetag: 10.11.2016
(51) Int. Cl.: A47J 31/46, F04B 17/04

(54) **GETRÄNKEZUBEREITUNGSSYSTEM**
BEVERAGE PREPARATION SYSTEM
SYSTÈME DE PRÉPARATION DE BOISSONS

(30) Priorität: 12.11.2015 DE 102015119567
(43) Veröffentlichungstag der Anmeldung: 19.09.2018
(73) Patentinhaber: Sysko AG, 7000 Chur (CH)
(72) Erfinder: HELBLING, Norbert, 8645 Jona (CH); WISSKIRCHEN, Michael, 88410 Bad Wurzach (DE); PARTZSCH, Fred, 88099 Neukirch (DE)
(74) Vertreter: Daub, Thomas
(86) Internationale Anmeldenummer: PCT/EP2016/077317
(87) Internationale Veröffentlichungsnummer: WO 2017/081185

(56) Entgegenhaltungen:
- WO-A1-2008/110187
- DE-A1-102008 004 460
- DE-U1-202009 011 965
- US-A1- 2004 000 237

## Beschreibung

### Stand der Technik

Die Erfindung betrifft ein Getränkezubereitungssystem.

Es ist bereits ein Getränkezubereitungssystem, mit einer Mehrzahl von Zubereitungseinheitenvarianten, die unterschiedliche Werte für einen Durchströmwiderstand aufweisen, und mit einer Haushaltsgerätevorrichtung, die eine Schwingkolbenpumpe mit einer Pumpkammer und zumindest eine Durchflussbegrenzungseinheit aufweist, die strömungstechnisch zumindest im Wesentlichen vor der Pumpkammer angeordnet ist, vorgeschlagen worden.

Die Aufgabe der Erfindung besteht insbesondere darin, ein konstruktiv besonders einfach aufgebautes Getränkezubereitungssystem bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

DE 20 2009 011965 U1 und DE 10 2008 004460 A1 zeigen Getränkezubereitungssysteme mit einer Schwingkolbenpumpe und einen Strömungsbegrenzer. US 2004/000237 A1 zeigt eine Maschine mit Strömungsbegrenzer. WO 2008/110187 A1 zeigt eine Schwingkolbenpumpe,

### Vorteile der Erfindung

Die Erfindung geht aus von einem Getränkezubereitungssystem, insbesondere von einem Getränkeautomatensystem, mit einer Mehrzahl von Zubereitungseinheitenvarianten, die unterschiedliche Werte für einen Durchströmwiderstand aufweisen, und mit einer Haushaltsgerätevorrichtung, die eine Schwingkolbenpumpe mit einer Pumpkammer und zumindest eine Durchflussbegrenzungseinheit aufweist, die strömungstechnisch zumindest im Wesentlichen vor der Pumpkammer angeordnet ist.

Es wird vorgeschlagen, dass die Durchflussbegrenzungseinheit einen Durchflusswiderstand aufweist, der einen Abgabevolumenstrom begrenzt entsprechend einem Durchströmwiderstand der größer ist als der Durchströmwiderstand von wenigstens 50 % der Zubereitungseinheitenvarianten. Dadurch kann ein Abgabevolumenstrom besonders wirkungsvoll begrenzt werden. Es kann ein konstruktiv besonders einfach aufgebautes Getränkezubereitungssystem bereitgestellt werden. Es kann eine hohe gleichbleibende Getränkequalität erreicht werden. Es kann ein hoher Benutzerkomfort erreicht werden. Vorzugsweise weist die Durchflussbegrenzungseinheit einen Durchflusswiderstand auf, der einen Abgabevolumenstrom entsprechend einem Durchströmwiderstand der größer ist als der Durchströmwiderstand von wenigstens 70 %, bevorzugt wenigstens 80 %, besonders bevorzugt wenigstens 90 % und ganz besonders bevorzugt von wenigstens 95 % der Zubereitungseinheitenvarianten begrenzt. Unter einem "Getränkezubereitungssystem" soll in diesem Zusammenhang insbesondere ein System zu einem Bezug von Getränkeportionen verstanden werden, beispielsweise ein Kapselgetränkeautomat, ein Pad-Getränkeautomat, eine Kapselkaffeemaschine, eine Pad-Kaffeemaschine oder eine Siebträgermaschine verstanden werden. Unter "Zubereitungseinheitenvarianten" sollen in diesem Zusammenhang insbesondere durch einen Wert eines Durchströmwiderstands unterschiedene Varianten von Zubereitungseinheiten verstanden werden, die insbesondere Teil einer vorgegebenen Menge von Varianten sind oder die bei einer Zubereitung, insbesondere bei einer in Bezug auf das Getränkezubereitungssystem bestimmungsgemäßen Zubereitung, möglicherweise auftreten. Unter einer "Zubereitungseinheit" soll in diesem Zusammenhang insbesondere eine Einheit verstanden werden, die zu einer Zubereitung einer Getränkeportion von einer von der Schwingkolbenpumpe geförderten Flüssigkeit, insbesondere von Wasser, durchströmt wird. Insbesondere ist die Zubereitungseinheit dazu vorgesehen, bei einer Getränkeausgabe aufgrund eines Durchströmwiderstands einen Staudruck zu erzeugen. Die Zubereitungseinheit ist beispielsweise als eine Kaffeekapsel oder Teekapsel oder eine andere Getränkekapsel oder als ein Pad oder als ein Siebträgereinsatz ausgebildet. Insbesondere weisen die Zubereitungseinheitenvarianten unterschiedliche Werte für den Durchströmwiderstand auf. Unter einer "Pumpkammer" einer Schwingkolbenpumpe soll in diesem Zusammenhang insbesondere eine Kammer verstanden werden, in der ein Pumpelement, beispielsweise ein Arbeitskolben eine zu fördernde Flüssigkeit beschleunigt. Vorzugsweise ist die Pumpkammer zu einer Kolbenführung vorgesehen. Unter "strömungstechnisch vor" einem Element soll in diesem Zusammenhang in Bezug auf eine Strömungsrichtung oberhalb verstanden werden. Insbesondere durchströmt eine Flüssigkeit in zumindest einem Betriebszustand der Schwingankerpumpe zunächst die Durchflussbegrenzungseinheit und anschließend die Pumpkammer. Unter einem "Abgabevolumenstrom" soll in diesem Zusammenhang insbesondere ein Volumenstrom an einem Auslass einer Pumpe und/oder ein Volumenstrom durch eine Zubereitungseinheit verstanden werden. Unter "vorgesehen" soll in diesem Zusammenhang insbesondere speziell, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einer vorteilhaften Ausgestaltung weist das Getränkezubereitungssystem einen Systemwiderstand auf, der für mehr als 50 % der Zubereitungseinheitenvarianten zumindest im Wesentlichen von dem Durchflusswiderstand der Durchflussbegrenzungseinheit bestimmt wird. Dadurch kann der Abgabevolumenstrom zumindest im Wesentlichen unabhängig von einer Zubereitungseinheitenvariante eingestellt werden. Eine Durchflussmenge kann besonders einfach, beispielsweise mittels einer Zeitmessung bestimmt werden. Vorzugsweise wird der Systemwiderstand für mehr als 70 %, bevorzugt für mehr als 80 %, besonders bevorzugt für mehr als 90 % und ganz besonders bevorzugt für mehr als 95 % der Zubereitungseinheitenvarianten von dem Durchflusswiderstand bestimmt. Unter einem Systemwiderstand soll in diesem Zusammenhang insbesondere ein in zumindest einem Betriebszustand auftretender Gesamtwiderstand, der einem Durchfluss einer für die Getränkezubereitung vorgesehenen Flüssigkeit entgegenwirkt, verstanden werden. Darunter, dass der Durchflusswiderstand der Durchflussbegrenzungseinheit, den Systemwiderstand bestimmt, soll in diesem Zusammenhang insbesondere verstanden werden, dass der Durchflusswiderstand eine Verringerung eines Abgabevolumenstroms um wenigstens 20 %, vorzugsweise um wenigstens 40 %, bevorzugt um wenigstens 50 % und besonders bevorzugt um wenigstens 60 % bewirkt.

Erfindungsgemäß wird eine Haushaltsgerätevorrichtung, insbesondere Getränkeautomatenvorrichtung, insbesondere für ein erfindungsgemäßes Getränkezubereitungssystem, vorgeschlagen, mit einer Schwingkolbenpumpe, die eine Pumpkammer aufweist, und mit zumindest einer Durchflussbegrenzungseinheit, die strömungstechnisch zumindest im Wesentlichen vor der Pumpkammer angeordnet ist, wobei die Durchflussbegrenzungseinheit dazu vorgesehen ist, zumindest in einem wesentlichen Arbeitsbereich einen zumindest im Wesentlichen konstanten Abgabevolumenstrom zu erzielen. Dadurch kann ein Abgabevolumenstrom vorteilhaft von einem druckseitigen Staudruck zumindest im Wesentlichen entkoppelt werden. Bei mehreren aufeinanderfolgenden Bezügen kann eine zumindest im Wesentlichen gleichbleibende Qualität und/oder gleichbleibende Bezugsdauer erreicht werden. Unter einem Arbeitsbereich soll in diesem Zusammenhang insbesondere ein Druckbereich verstanden werden. Vorzugsweise ist der Arbeitsbereich als ein Druckbereich zwischen 0,5 bar und 3 bar, bevorzugt als ein Druckbereich zwischen 3 bar und 8 bar, besonders bevorzugt als ein Druckbereich zwischen 8 bar und 15 bar und ganz besonders bevorzugt als ein Druckbereich von mehr als 15 bar ausgebildet. Unter einem zumindest "im Wesentlichen konstanten Abgabevolumenstrom" soll in diesem Zusammenhang ein zumindest über eine Mehrzahl von Kolbenhüben der Schwingkolbenpumpe zeitlich gemittelter Abgabevolumenstrom, vorzugsweise ein über eine Bezugsdauer gemittelter Abgabevolumenstrom verstanden werden, der um weniger als 15 %, vorzugsweise um weniger als 10 % und bevorzugt um weniger als 5 % schwankt. Bevorzugt schwankt der Abgabestrom bei aufeinanderfolgenden Bezügen um weniger als 15 %, vorzugsweise um weniger als 10 % und bevorzugt um weniger als 5 %.

In vorteilhafter Weise bewirkt die Durchflussbegrenzungseinheit in zumindest einem Betriebszustand bei einem Volumenstrom von zumindest im Wesentlichen 310 ml/min einen Druckabfall, der einem Staudruck auf einer Druckseite von wenigstens 1 bar entspricht. Dadurch kann ein Wert eines Abgabestroms besonders vorteilhaft eingestellt werden. Vorzugsweise bewirkt die Druckbegrenzungseinheit bei einem Volumenstrom von zumindest im Wesentlichen 300 ml/min einen Druckabfall, der einem Staudruck auf einer Druckseite von wenigstens 6 bar entspricht und bevorzugt bewirkt die Druckbegrenzungseinheit bei einem Volumenstrom von zumindest im Wesentlichen 200 ml/min einen Druckabfall, der einem Staudruck auf einer Druckseite von wenigstens 12 bar entspricht.

Erfindungsgemäß wird vorgeschlagen, dass die Schwingkolbenpumpe auf einen Staudruck von zumindest im Wesentlichen 3 bar ausgelegt ist und die Durchflussbegrenzungseinheit einen effektiven Durchflussquerschnitt von weniger als 0,95 mm² aufweist oder dass die Schwingkolbenpumpe auf einen Staudruck von zumindest im Wesentlichen 7 bar ausgelegt ist und die Durchflussbegrenzungseinheit einen effektiven Durchflussquerschnitt von weniger als 0,59 mm² aufweist oder dass die Schwingkolbenpumpe auf einen Staudruck von zumindest im Wesentlichen 8 bar ausgelegt ist und die Durchflussbegrenzungseinheit einen effektiven Durchflussquerschnitt von weniger als 0,54 mm² aufweist oder dass die Schwingkolbenpumpe auf einen Staudruck von zumindest im Wesentlichen 12 bar ausgelegt ist und die Durchflussbegrenzungseinheit einen effektiven Durchflussquerschnitt von weniger als 0,40 mm² aufweist. Dadurch kann ein Wert eines Abgabestroms auf besonders einfache Weise vorteilhaft eingestellt werden. Unter dem Wert eines effektiven Durchflussquerschnitts soll in diesem Zusammenhang insbesondere eine Größe einer wirkungsgleichen Querschnittsfläche eines zumindest im Wesentlichen kreisförmigen Blendenquerschnitts verstanden werden.

In einer vorteilhaften Ausgestaltung weist die Schwingkolbenpumpe ein Einlasselement auf, das zumindest teilweise einstückig mit der Durchflussbegrenzungseinheit ausgebildet ist. Dadurch kann eine konstruktiv einfach aufgebaute Durchflussbegrenzungseinheit bereitgestellt werden. Es kann eine besonders kompakte Durchflussbegrenzungseinheit bereitgestellt werden. Vorzugsweise ist das Einlasselement zu einem Anschluss an eine Zuführleitung, beispielsweise zu einem Anschluss an einen Schlauch vorgesehen. Vorzugsweise weist das Einlasselement den Durchflussquerschnitt auf. Vorzugsweise weist die Durchflussbegrenzungseinheit einen Durchflussquerschnitt auf, der als ein minimaler effektiver Durchflussquerschnitt der Schwingankerpumpe ausgebildet ist. Bevorzugt weist das Einlasselement einen Kanal oder eine Blende auf mit einem zumindest im Wesentlichen kreisförmigen Durchflussquerschnitt, dessen Querschnittsfläche dem effektiven Durchflussquerschnitt der Durchflussbegrenzungseinheit entspricht.

Ferner wird vorgeschlagen, dass die Durchflussbegrenzungseinheit zumindest einen Mengenbegrenzer mit einer Mehrzahl von Durchflusskanälen aufweist. Dadurch kann besonders wirkungsvoll vermieden werden, dass die Durchflussbegrenzungseinheit verstopft. Es kann eine besonders robuste Haushaltsgerätevorrichtung bereitgestellt werden. Vorzugsweise weist der Mengenbegrenzer wenigstens zwei, bevorzugt wenigstens drei und besonders bevorzugt wenigstes vier Durchflusskanäle auf.

Ferner wird vorgeschlagen, dass die Durchflussbegrenzungseinheit zumindest eine Stelleinheit zum Einstellen eines effektiven Durchflussquerschnitts aufweist. Dadurch kann eine Haushaltsgerätevorrichtung mit einem besonders großen Einsatzbereich bereitgestellt werden. Es kann ein hoher Benutzerkomfort erreicht werden. Vorzugsweise ist die Stelleinheit dazu vorgesehen, zumindest zwei verschiedene Werte für den effektiven Durchflussquerschnitt zu einem Betrieb der Haushaltsgerätevorrichtung einzustellen, insbesondere in Abhängigkeit von einer Benutzerwahl. Vorzugsweise ist die Stelleinheit als eine rein mechanische Stelleinheit ausgebildet.

In einer vorteilhaften Ausgestaltung weist die Stelleinheit zumindest zwei Quetschschläuche und zumindest ein Stellelement auf, das dazu vorgesehen ist, alternativ mit jeweils einem der Quetschschläuche zusammenzuwirken. Dadurch kann eine besonders robuste Stelleinheit bereitgestellt werden. Vorzugsweise weist die Durchflussbegrenzungseinheit zumindest zwei Strömungspfade zu der Schwingkolbenpumpe auf, in denen jeweils einer der zumindest zwei Quetschschläuche angeordnet ist. Bevorzugt weisen die Zuführpfade unterschiedliche effektive Durchflussquerschnitte auf. Vorzugsweise ist die Stelleinheit dazu vorgesehen, mittels des Stellelements einen der Strömungspfade zu verschließen.

Ferner, nicht als Teil der Erfindung, wird eine Schwingkolbenpumpe einer solchen Haushaltsvorrichtung vorgeschlagen. Dadurch kann eine besonders flexibel einsetzbare Schwingkolbenpumpe bereitgestellt werden. Eine gesonderte Durchflusszählereinheit kann vermieden werden. Eine Teilezahl einer Haushaltsgerätevorrichtung kann gering gehalten werden.

Ferner wird ein Verfahren zum Betrieb einer Haushaltsgerätevorrichtung mit einer Schwingkolbenpumpe vorgeschlagen, bei dem eine strömungstechnisch vor einer Pumpkammer der Schwingkolbenpumpe angeordnete Durchflussbegrenzungseinheit einen Volumenstrom durch die Pumpkammer zumindest im Wesentlichen zumindest in einem wesentlichen Arbeitsbereich konstant hält. Dadurch kann eine hohe Qualität von ausgegebenen Getränkeportionen erreicht werden. Es kann ein besonders zuverlässiger Betrieb der Haushaltsgerätevorrichtung erreicht werden.

### Zeichnungen

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines erfindungsgemäßen Getränkezubereitungssystems mit einer Durchflussbegrenzungseinheit,
- Fig. 2: eine schematische Darstellung zum Aufbau des Getränkezubereitungssystems,
- Fig. 3: einen Schnitt entlang einer Längsachse einer Schwingkolbenpumpe des Getränkezubereitungssystems,
- Fig. 4a: eine perspektivische Ansicht eines Mengenbegrenzers der Durchflussbegrenzungseinheit mit getrennt dargestelltem Drosselelement,
- Fig. 4b: eine perspektivische Ansicht eines Mengenbegrenzers der Durchflussbegrenzungseinheit mit montiertem Drosselelement,
- Fig. 5: eine Aufsicht auf eine Auslassseite des Mengenbegrenzers,
- Fig. 6: eine schematische Darstellung zum Aufbau eines weiteren Ausführungsbeispiels des Getränkezubereitungssystems, bei dem die Durchflussbegrenzungseinheit einstückig mit einem Einlasselement einer Schwingkolbenpumpe ausgebildet ist,
- Fig. 7: einen Schnitt entlang einer Längsachse einer Schwingkolbenpumpe des Getränkezubereitungssystems,
- Fig. 8: eine schematische Darstellung zum Aufbau eines weiteren Ausführungsbeispiels des Getränkezubereitungssystems, mit einer Stelleinheit,
- Fig. 9: eine Schnittansicht quer zu einer Längsachse der Stelleinheit,
- Fig. 10: eine Schnittansicht der Stelleinheit in einer ersten Stellposition und
- Fig. 11: eine Schnittansicht der Stelleinheit in einer weiteren Stellposition.

### Beschreibung der Ausführungsbeispiele

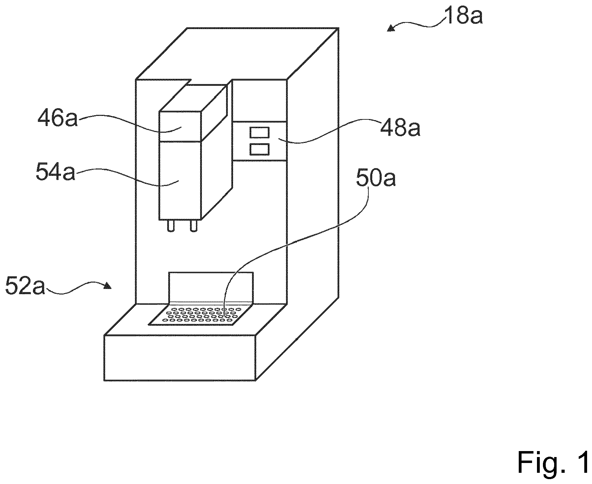

Figur 1 zeigt ein Getränkezubereitungssystem 10a. Das Getränkezubereitungssystem 10a ist als ein Getränkeautomatensystem ausgebildet. Das Getränkezubereitungssystem 10a weist eine Haushaltsgerätevorrichtung 18a auf. Die Haushaltsgerätevorrichtung 18a ist in dem vorliegenden Ausführungsbeispiel als ein Kapselkaffeeautomat ausgebildet. Die Haushaltsgerätevorrichtung 18a ist dazu vorgesehen, Getränkeportionen zuzubereiten und auszugeben. Die Haushaltsgerätevorrichtung 18a ist zu einer portionsweisen Ausgabe von Getränken vorgesehen.

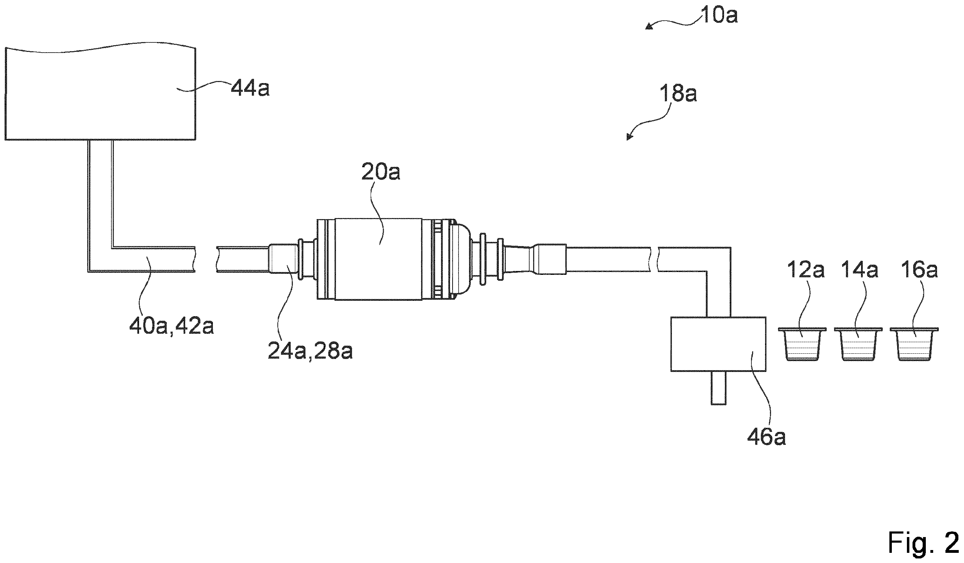

Das Getränkezubereitungssystem 10a weist eine Mehrzahl von Zubereitungseinheitenvarianten 12a, 14a, 16a auf. Die Haushaltsgerätevorrichtung 18a ist dazu vorgesehen, zur Zubereitung einer Getränkeportion jeweils einen Inhalt einer Zubereitungseinheit aufzubrühen (vgl. Figur 2). In dem vorliegenden Ausführungsbeispiel sind die Zubereitungseinheiten jeweils als eine mit Kaffeemehl gefüllte Kapsel ausgebildet. Die für einen Brühvorgang vorgesehenen Zubereitungseinheiten sind jeweils einer der Zubereitungseinheitenvarianten 12a, 14a, 16a zugeordnet. Die Zubereitungseinheitenvarianten 12a, 14a, 16a weisen unterschiedliche Werte innerhalb eines Wertebereichs für einen Durchströmwiderstand auf.

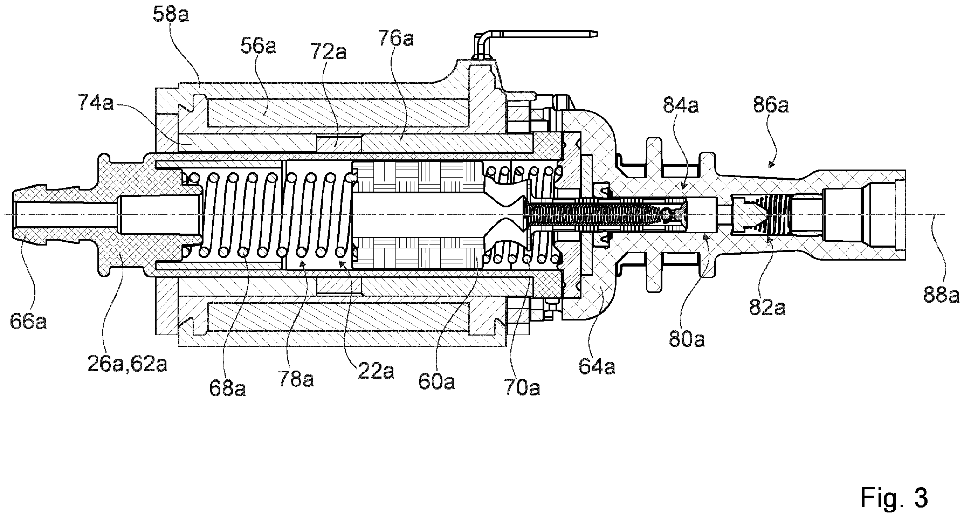

Die Haushaltsgerätevorrichtung 18a weist einen Flüssigkeitsvorratsbehälter 44a auf, der Flüssigkeit speichert, die für die Zubereitung der Getränkeportionen vorgesehen ist. In dem vorliegenden Ausführungsbeispiel ist der Flüssigkeitsvorratsbehälter 44a als ein Wasserbehälter ausgebildet. Die Haushaltsgerätevorrichtung 18a weist eine Getränkepumpe auf, die als eine Schwingkolbenpumpe 20a ausgebildet ist. Die Schwingkolbenpumpe 20a weist eine Pumpkammer 22a auf (vgl. Figur 3). Die Schwingkolbenpumpe 20a ist dazu vorgesehen, Flüssigkeit in der Haushaltsgerätevorrichtung 18a zu fördern und durch eine jeweils eingelegte Zubereitungseinheit zu pressen. Die Schwingkolbenpumpe 20a ist dazu vorgesehen, einen Abgabevolumenstrom zu erzeugen. Die Haushaltsgerätevorrichtung 18a weist eine Zuführleitung 40a auf, die strömungstechnisch zwischen dem Flüssigkeitsvorratsbehälter 44a und der Schwingkolbenpumpe 20a angeordnet ist. Die Zuführleitung 40a bildet einen Zuführpfad 42a aus. In dem vorliegenden Ausführungsbeispiel weist die Haushaltsgerätevorrichtung 18a genau einen Zuführpfad 42a auf. Die Haushaltsgerätevorrichtung 18a weist eine Durchflussbegrenzungseinheit 24a auf, die strömungstechnisch zumindest im Wesentlichen vollständig oberhalb der Pumpkammer 22a angeordnet ist. Die Durchflussbegrenzungseinheit 24a ist strömungstechnisch zumindest im Wesentlichen vor der Pumpkammer 22a angeordnet.

Die Durchflussbegrenzungseinheit 24a ist in dem vorliegenden Ausführungsbeispiel in der Zuführleitung 40a angeordnet. Die Durchflussbegrenzungseinheit 24a ist strömungstechnisch zwischen dem Flüssigkeitsvorratsbehälter 44a und der Schwingkolbenpumpe 20a angeordnet. Die Haushaltsgerätevorrichtung 18a weist eine Aufnahmeeinheit 46a für die Zubereitungseinheiten auf. Die Aufnahmeeinheit 46a ist dazu vorgesehen, zu einem Wechsel von Zubereitungseinheiten geöffnet zu werden. Das Haushaltsgerätevorrichtung 18a umfasst ferner eine Bedieneinheit 48a, die zu einer Benutzereingabe vorgesehen ist. Das Haushaltsgerät umfasst einen Abstellrost 50a und eine Gefäßaufnahme 52a. Die Haushaltsgerätevorrichtung 18a umfasst eine Ausgabeeinheit 54a zu einer Ausgabe von Getränkeportionen, insbesondere in ein in der Gefäßaufnahme 52a angeordnetes Gefäß. Die Ausgabeeinheit 54a ist strömungstechnisch mit der Schwingkolbenpumpe 20a verbunden. Die Ausgabeeinheit 54a ist strömungstechnisch nach der Schwingkolbenpumpe 20a angeordnet. Die Ausgabeeinheit 54a ist strömungstechnisch unterhalb der Schwingkolbenpumpe 20a angeordnet.

Die Durchflussbegrenzungseinheit 24a weist einen Durchflusswiderstand auf, der den Abgabevolumenstrom begrenzt entsprechend einem Durchströmwiderstand der größer ist als der Durchströmwiderstand von wenigstens 50 % der Zubereitungseinheitenvarianten 12a, 14a, 16a. Die Durchflussbegrenzungseinheit 24a weist einen Durchflusswiderstand auf, der wenigstens einem Wert in den oberen 50 % des Wertebereichs für den Durchströmwiderstand entspricht. Die Durchflussbegrenzungseinheit 24a weist einen Durchflusswiderstand auf, dem ein Wert eines Durchströmwiderstands entspricht, der größer ist als ein Wert für den Durchströmwiderstand von wenigstens 50 % der Zubereitungseinheitenvarianten 12a, 14a, 16a. Die Durchflussbegrenzungseinheit 24a weist in dem vorliegenden Ausführungsbeispiel einen Durchflusswiderstand auf, dem ein Wert eines Durchströmwiderstands entspricht, der größer ist als ein Wert für den Durchströmwiderstand von wenigstens 95 % der Zubereitungseinheitenvarianten 12a, 14a, 16a. Beispielsweise weist das Getränkezubereitungssystem 10a 44 Zubereitungseinheiten auf, die unterschiedliche Werte innerhalb eines Wertebereichs für einen Durchströmwiderstand aufweisen. Zwei der Zubereitungseinheitenvarianten 12a, 14a weisen dann einen Wert für den Durchströmwiderstand auf, der größer ist als ein entsprechender Wert des Durchflusswiderstands der Durchflussbegrenzungseinheit 24a.

Das Getränkezubereitungssystem 10a weist einen Systemwiderstand auf. In dem vorliegenden Ausführungsbeispiel setzt sich der Systemwiderstand aus dem Widerstand aller Elemente zusammen, die einen Förderpfad für die Flüssigkeit ausbilden. Der Systemwiderstand wird insbesondere von einem Widerstand der Zuführleitung 40a, der Durchflussbegrenzungseinheit 24a, der Schwingkolbenpumpe 20a, und einer eingesetzten Zubereitungseinheit gebildet. Der Systemwiderstand wird für mehr als 50 % der Zubereitungseinheitenvarianten 12a, 14a zumindest im Wesentlichen von dem Durchflusswiderstand der Durchflussbegrenzungseinheit 24a bestimmt. In dem vorliegenden Ausführungsbeispiel wird der Systemwiderstand für mehr als 95 % der Zubereitungseinheitenvarianten 12a, 14a, 16a zumindest im Wesentlichen von dem Durchflusswiderstand der Durchflussbegrenzungseinheit 24a bestimmt. Ein Beitrag des Durchflusswiderstands zum Systemwiderstand ist für mehr als 95 % der Zubereitungseinheitenvarianten 12a, 14a, 16a größer als 50 %. Für 95 % der Zubereitungseinheitenvarianten 12a, 14a, 16a weist der Systemwiderstand einen zumindest im Wesentlichen gleichen Wert auf.

Die Schwingkolbenpumpe 20a ist zur Förderung von Flüssigkeit, die zur Zubereitung einer Getränkeportion vorgesehen ist, unter einem Druck von wenigstens 8 bar vorgesehen. Die Schwingkolbenpumpe 20a weist einen wesentlichen Arbeitsbereich von 8 bar bis 15 bar auf. Die Schwingkolbenpumpe 20a ist dazu vorgesehen, Flüssigkeit gegen einen Staudruck von bis zu 15 bar zu fördern. Es ist denkbar, dass die Schwingkolbenpumpe 20a zur Förderung einer Flüssigkeit unter einem geringeren Druck, wie beispielsweise von wenigstens 3 bar oder 0,5 bar vorgesehen ist. Es ist auch denkbar, dass die Schwingkolbenpumpe 20a zur Förderung einer Flüssigkeit unter einem höheren Druck vorgesehen ist. Die Schwingkolbenpumpe 20a umfasst einen Magnetaktor mit einer Magnetspule 56a und mit einem Spulengehäuse 58a. Die Schwingkolbenpumpe 20a umfasst einen Arbeitskolben 60a. Der Magnetaktor ist dazu vorgesehen, ein Magnetfeld zu einem Antrieb des Arbeitskolbens 60a zu erzeugen.

Die Schwingkolbenpumpe 20a weist zwei Anschlusselemente 62a, 64a auf. Ein erstes der Anschlusselemente 62a ist als ein Einlasselement 26a ausgebildet und zu einem Anschluss der Schwingkolbenpumpe 20a an die Zuführleitung 40a vorgesehen. Das erste Anschlusselement 62a weist einen Anschlussstutzen 66a zu einem Anschluss an die Zuführleitung 40a auf. Es ist denkbar, dass das erste Anschlusselement 62a eine Anschlusskupplung aufweist. Ein weiteres der Anschlusselemente 64a ist als ein Auslasselement ausgebildet und weist eine Anschlusskupplung auf. Es ist denkbar, dass das weitere Anschlusselement 64a einen Anschlussstutzen aufweist.

Die Schwingkolbenpumpe 20a umfasst zwei in einander entgegengesetzten Richtungen auf den Arbeitskolben 60a wirkende Federelemente 68a, 70a. Der Arbeitskolben 60a ist schwimmend zwischen den beiden Federelementen 68a, 70a gelagert. Der Arbeitskolben 60a ist zumindest im Wesentlichen ununterbrochen mit beiden Federelementen 68a, 70a in Kontakt. Eines der Federelemente 68a ist als eine Pumpfeder ausgebildet. Das als Pumpfeder ausgebildete Federelement 68a ist dazu vorgesehen, den Arbeitskolben 60a bei einem Druckhub anzutreiben. Das Federelement 68a ist als eine Schraubendruckfeder ausgebildet. Das weitere der Federelemente 70a ist als ein Dämpfungselement ausgebildet. Das weitere Federelement 70a ist in dem vorliegenden Ausführungsbeispiel als eine Schraubenfeder ausgebildet. Es ist denkbar, dass das weitere Federelement 70a als ein anderes elastisches Element ausgebildet ist, beispielsweise als ein Balgelement und/oder als ein poröses Element.

In der Pumpkammer 22a der Schwingkolbenpumpe 20a ist der Arbeitskolben 60a axial beweglich geführt. Die Pumpkammer 22a weist eine Pumpkammerwand auf, die als eine Kolbenführung ausgebildet ist. Die Pumpkammer 22a durchsetzt das Spulengehäuse 58a mit der Magnetspule 56a. Die Magnetspule 56a ist dazu vorgesehen, ein Magnetfeld zu erzeugen, das teilweise die Pumpkammer 22a durchsetzt. Zur Lenkung des Magnetfeldes umfasst die Schwingkolbenpumpe 20a einen Eisenkreis, welcher die Magnetspule 56a teilweise umgibt. Der Eisenkreis umfasst im Bereich der Pumpkammer 22a einen magnetisch isolierenden Spalt, welcher den Eisenkreis unterbricht. In dem magnetisch isolierenden Spalt ist in dem vorliegenden Ausführungsbeispiel ein Distanzring 72a angeordnet, der eine axiale Erstreckung von zumindest im Wesentlichen 6,5 mm aufweist. Der Eisenkreis umfasst zwei Polhülsenelemente 74a, 76a, zwischen deren Enden der magnetisch isolierende Spalt angeordnet ist.

Der Arbeitskolben 60a umfasst ein Ankerelement, das vollständig aus einem magnetisierbaren Material besteht. In einer Ruhestellung, d.h. bei abgeschalteter Magnetspule 56a, weist das Ankerelement eine Position auf, bei der es teilweise mit dem Spalt, der den Eisenkreis unterbricht, axial überlappt. Wird die Magnetspule 56a bestromt, stellt sich ein magnetischer Fluss in dem Eisenkreis und dem Ankerelement ein. Auf das Ankerelement wirkt eine Betätigungskraft, welche das Ankerelement aus seiner Ruheposition gegen eine Kraft des als Pumpfeder ausgebildeten Federelements 68a auslenkt. In dem vorliegenden Ausführungsbeispiel ist das Ankerelement stoffschlüssig mit einem Grundkörper des Arbeitskolbens 60a verbunden.

Zur Erzielung einer Pumpwirkung wird die Magnetspule 56a mit einer pulsförmigen Spannung bestromt, wodurch sich im Bereich der Pumpkammer 22a ein sich ständig veränderndes Magnetfeld einstellt. Das sich pulsförmig verändernde Magnetfeld bewirkt, dass der Arbeitskolben 60a zu einer Pendelbewegung angeregt wird. Die Pumpkammer 22a umfasst bei montiertem Arbeitskolben 60a eine Vorkammer 78a, eine Druckkammer 80a und eine Auslasskammer 82a. Der Arbeitskolben 60a umfasst ein Kolbenventil 84a, das strömungstechnisch zwischen der Vorkammer 78a und der Druckkammer 80a angeordnet ist. In einem Füllhub, bei dem der Arbeitskolben 60a durch das Magnetfeld entgegen der Kraft des als Pumpfeder ausgebildeten Federelements 68a bewegt wird, strömt Flüssigkeit von der Vorkammer 78a durch das Kolbenventil 84a in die Druckkammer 80a. In einem anschließenden Druckhub, bei dem der Arbeitskolben 60a durch die Kraft des Federelements 68a bewegt wird, wird die Flüssigkeit aus der Druckkammer 80a herausgedrückt. Der Maximaldruck, der dabei auf die Flüssigkeit wirkt, hängt insbesondere von der Kraft des Federelements 68a ab. Ein Weg, um den der Arbeitskolben 60a dabei bewegt wird, hängt von einer Ausgestaltung der Schwingkolbenpumpe 20a ab.

Die Schwingkolbenpumpe 20a umfasst ein Auslassventil 86a, das in der Auslasskammer 82a angeordnet ist. Die Auslasskammer 82a wird von dem weiteren Anschlusselement 64a ausgebildet. Das Auslassventil 86a ist strömungstechnisch zwischen der Druckkammer 80a und der Auslasskammer 82a der Schwingkolbenpumpe 20a angeordnet. Das Auslassventil 86a ist bezogen auf eine Längsachse 88a der Schwingkolbenpumpe 20a zentral in der Schwingkolbenpumpe 20a und zentral in der Auslasskammer 82a angeordnet. Die Auslasskammer 82a ist strömungstechnisch zwischen der Druckkammer 80a und einer Auslassöffnung angeordnet. Das Auslassventil 86a ist als ein Rückschlagventil ausgebildet, welches eine Durchlassrichtung von der Druckkammer 80a zu der Auslasskammer 82a aufweist. Das Druckkammerelement weist eine kreisförmige Öffnung auf, die einen Ventilsitz für das Auslassventil 86a ausbildet.

Für 95 % der Zubereitungseinheitenvarianten 12a, 14a, 16a weist der Abgabevolumenstrom der Schwingkolbenpumpe 20a gemittelt über eine Mehrzahl von Hüben des Arbeitskolbens 60a einen zumindest im Wesentlichen gleichen Wert auf. Für 95 % der Zubereitungseinheitenvarianten 12a, 14a, 16a weist der Abgabevolumenstrom der Schwingkolbenpumpe 20a gemittelt über die Abgabe einer Getränkeportion einen zumindest im Wesentlichen gleichen Wert auf. Die Durchflussbegrenzungseinheit 24a ist dazu vorgesehen, in dem wesentlichen Arbeitsbereich der Schwingkolbenpumpe 20a einen konstanten Abgabevolumenstrom zu erzielen. Die Durchflussbegrenzungseinheit 24a ist dazu vorgesehen, in dem wesentlichen Arbeitsbereich der Schwingkolbenpumpe 20a bei einer Ausgabe von aufeinanderfolgenden Getränkeportionen einen zumindest im Wesentlichen gleichen Abgabevolumenstrom zu erzielen. Die Durchflussbegrenzungseinheit 24a ist dazu vorgesehen, in dem wesentlichen Arbeitsbereich der Schwingkolbenpumpe 20a einen Ausgabenvolumenstrom zu erzielen, der zumindest im Wesentlichen unabhängig von einem der Förderung der Flüssigkeit entgegenstehenden Staudruck ist. Der Abgabevolumenstrom schwankt zwischen zwei aufeinanderfolgenden Ausgaben von Getränkeportionen um weniger als 7 %.

Die Durchflussbegrenzungseinheit 24a bewirkt in zumindest einem Betriebszustand bei einem Volumenstrom von zumindest im Wesentlichen 200 ml/min einen Druckabfall, der einem Staudruck auf einer Druckseite von wenigstens 12 bar entspricht. Beispielsweise beträgt bei der Ausgabe einer Getränkeportion bei einem Volumenstrom von 200 ml/min der Staudruck druckseitig von der Schwingkolbenpumpe 20a 12 bar für eine Zubereitungseinheit einer ersten Zubereitungseinheitenvariante 12a. Für eine Zubereitungseinheit einer weiteren Zubereitungseinheitenvariante 14a, die einen geringeren Durchströmwiderstand aufweist als die Zubereitungseinheit der ersten Zubereitungseinheitenvariante 12a, beträgt der Volumenstrom ebenso zumindest im Wesentlichen 200 ml/min, während der Staudruck druckseitig kleiner als 12 bar ist.

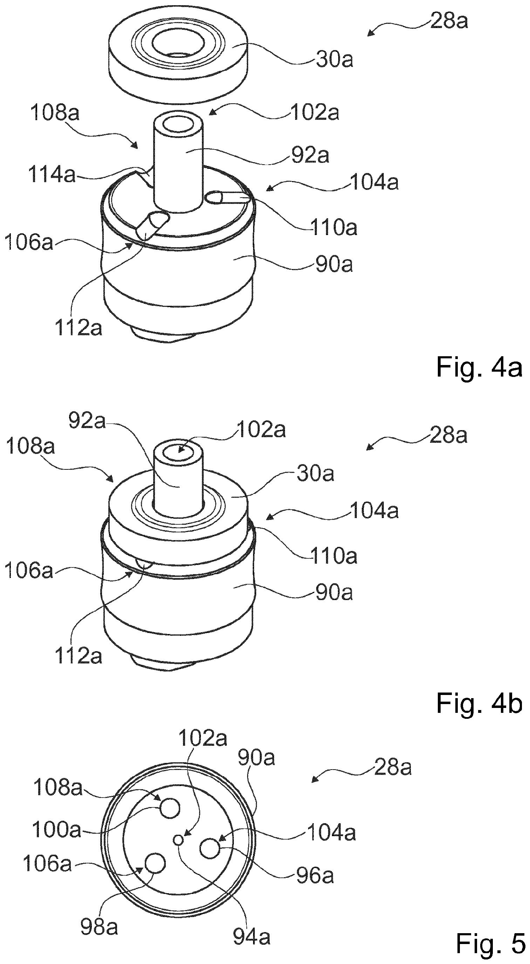

Die Durchflussbegrenzungseinheit 24a weist zumindest einen Mengenbegrenzer 28a mit einer Mehrzahl von Durchflusskanälen 102a, 104a, 106a, 108a auf (vgl. Figur 4a und Figur 4b). Der Mengenbegrenzer 28a weist vier Durchflusskanäle 102a, 104a, 106a, 108a auf. Der Mengenbegrenzer 28a ist dazu vorgesehen, einen Abgabevolumenstrom der von der Schwingkolbenpumpe 20a geförderten Flüssigkeit zu begrenzen. Der Mengenbegrenzer 28a ist strömungstechnisch oberhalb der Schwingkolbenpumpe 20a angeordnet. Der Mengenbegrenzer 28a ist strömungstechnisch vor der Pumpkammer 22a der Schwingkolbenpumpe 20a angeordnet. Der Mengenbegrenzer 28a ist benachbart zu dem als ein Einlasselement 26a ausgebildeten Anschlusselement 64a der Schwingkolbenpumpe 20a angeordnet. Der Mengenbegrenzer 28a weist in dem vorliegenden Ausführungsbeispiel einen zylinderförmigen Grundkörper 90a und einen rohrförmigen Führungszapfen 92a auf. Der Grundkörper 90a und der Führungszapfen 92a sind konzentrisch zueinander angeordnet. Der Grundkörper 90a und der Führungszapfen 92a sind unbeweglich fest miteinander verbunden. In dem vorliegenden Ausführungsbeispiel sind der Grundkörper 90a und der Führungszapfen 92a einstückig ausgebildet. Der Grundkörper 90a und der Führungszapfen 92a weisen eine gemeinsame Achse auf, die in einem montierten Zustand zumindest im Wesentlichen parallel zu einer Strömungsrichtung ausgerichtet ist.

Der Mengenbegrenzer 28a weist ferner ein Drosselelement 30a auf. Das Drosselelement 30a ist scheibenförmig ausgebildet und weist eine zentrale Ausnehmung auf. Ein Innendurchmesser der Ausnehmung entspricht einem Außendurchmesser des Führungszapfens 92a. Der Führungszapfen 92a ist dazu vorgesehen, das Drosselelement 30a zu halten. Der Führungszapfen 92a ist dazu vorgesehen, das Drosselelement 30a relativ zu dem Grundkörper 90a zu zentrieren. In einem montierten Zustand sind der Grundkörper 90a und das Drosselelement 30a unbeweglich fest miteinander verbunden. Beispielsweise sind der Grundkörper 90a und das Drosselelement 30a miteinander verklebt oder verschweißt. Es ist denkbar, dass der Grundkörper 90a und das Drosselelement 30a lediglich verschiebefest miteinander verbunden sind.

Der Grundkörper 90a weist eine Mehrzahl von axialen Bohrungen 94a, 96a, 98a, 100a auf. Der Grundkörper 90a weist in dem vorliegenden Ausführungsbeispiel vier axiale Bohrungen 94a, 96a, 98a, 100a auf (vgl. Figur 5). Eine der Bohrungen 94a kann zentral angeordnet sein und mit einem Innenraum des Führungszapfens 92a einen gemeinsamen Durchflusskanal 102a bilden. Es ist denkbar, dass der Grundkörper 90a ohne zentrale Bohrung ausgebildet ist. Die weiteren der Bohrungen 96a, 98a, 100a sind in Umfangsrichtung gleichmäßig beabstandet in einem gleichen radialen Abstand von der zentral angeordneten Bohrung 94a angeordnet. Die Bohrungen 94a, 96a, 98a, 100a weisen jeweils einen Durchflussquerschnitt auf. Der effektive Durchflussquerschnitt beträgt in dem vorliegenden Ausführungsbeispiel einen Wert von zumindest im Wesentlichen 0,5 mm².

Der Grundkörper 90a weist eine erste axiale Stirnfläche auf, an welcher der Führungszapfen 92a angeordnet ist. Der Grundkörper 90a weist an der ersten axialen Stirnfläche eine Mehrzahl von Durchflussrinnen 110a, 112a, 114a auf. Der Grundkörper 90a weist drei Durchflussrinnen 110a, 112a, 114a auf. Die Durchflussrinnen 110a, 112a, 114a sind sternförmig an der Stirnfläche angeordnet. Die Durchflussrinnen 110a, 112a, 114a verbinden jeweils einen Außenumfang des Grundkörpers 90a mit einer der weiteren Bohrungen 94a, 96a, 98a. Die Durchflussrinnen 110a, 112a, 114a sind gerade ausgebildet. Es ist denkbar, dass die Durchflussrinnen 110a, 112a, 114a gebogen und/oder spiralförmig ausgebildet sind. Die Durchflussrinnen 110a, 112a, 114a verlaufen in einer radialen Richtung. Die Durchflussrinnen 110a, 112a, 114a bilden jeweils mit einer der weiteren Bohrungen 94a, 96a, 98a einen Durchflusskanal 104a, 106a, 108a aus. Der Grundkörper 90a weist eine weitere axiale Stirnfläche auf, die abgewandt von der ersten axialen Stirnfläche angeordnet ist.

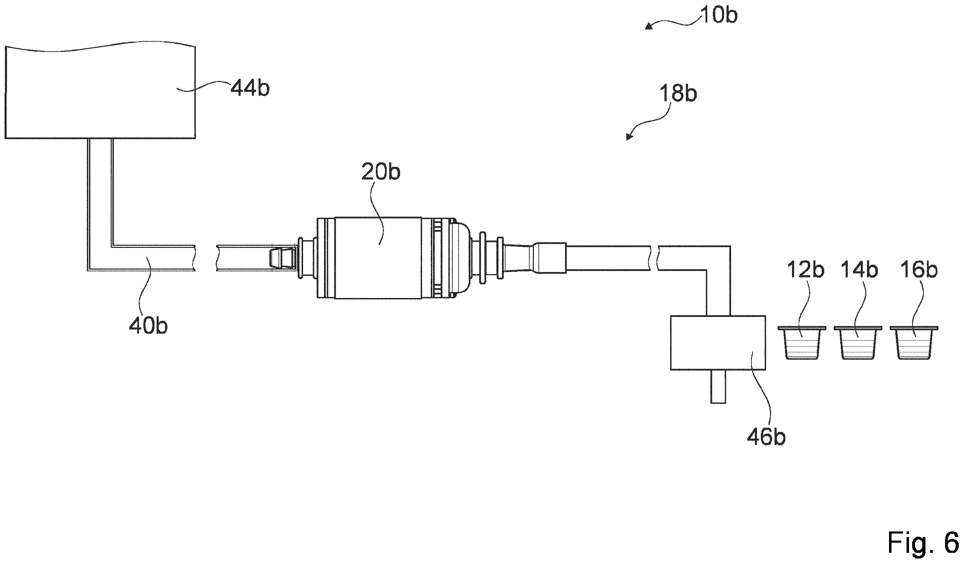

In den Figuren 6 bis 11 sind zwei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 5, verwiesen werden kann. Zur Unterscheidung der Ausführungsbeispiele ist der Buchstabe a den Bezugszeichen des Ausführungsbeispiels in den Figuren 1 bis 5 nachgestellt. In den Ausführungsbeispielen der Figuren 6 bis 11 ist der Buchstabe a durch die Buchstaben b und c ersetzt.

Figur 6 zeigt ein weiteres Ausführungsbeispiel des Getränkezubereitungssystems 10b. Das Getränkezubereitungssystem 10b ist analog zu dem vorhergehenden Ausführungsbeispiel als ein Getränkeautomatensystem ausgebildet. Das Getränkezubereitungssystem 10b weist eine Haushaltsgerätevorrichtung 18b auf. Die Haushaltsgerätevorrichtung 18b ist in dem vorliegenden Ausführungsbeispiel als ein Kapselkaffeeautomat ausgebildet. Die Haushaltsgerätevorrichtung 18b ist dazu vorgesehen, Getränkeportionen zuzubereiten und auszugeben. Die Haushaltsgerätevorrichtung 18b ist zu einer portionsweisen Ausgabe von Getränken vorgesehen.

Das Getränkezubereitungssystem 10b weist eine Mehrzahl von Zubereitungseinheitenvarianten 12b, 14b, 16b auf. Die Haushaltsgerätevorrichtung 18b ist dazu vorgesehen, zur Zubereitung einer Getränkeportion jeweils einen Inhalt einer Zubereitungseinheit aufzubrühen. Die Zubereitungseinheitenvarianten 12b, 14b, 16b weisen unterschiedliche Werte innerhalb eines Wertebereichs für einen Durchströmwiderstand auf.

Die Haushaltsgerätevorrichtung 18b weist einen Flüssigkeitsvorratsbehälter 44b auf, der Flüssigkeit speichert, die für die Zubereitung der Getränkeportionen vorgesehen ist. Die Haushaltsgerätevorrichtung 18b weist eine Schwingkolbenpumpe 20b mit einer Pumpkammer 22b auf. Die Haushaltsgerätevorrichtung 18b weist eine Zuführleitung 40b auf, die strömungstechnisch zwischen dem Flüssigkeitsvorratsbehälter 44b und der Schwingkolbenpumpe 20b angeordnet ist. Die Haushaltsgerätevorrichtung 18b weist eine Durchflussbegrenzungseinheit 24b auf, die strömungstechnisch zumindest im Wesentlichen vollständig vor der Pumpkammer 22b angeordnet ist. Die Haushaltsgerätevorrichtung 18b weist eine Durchflussbegrenzungseinheit 24b auf, die strömungstechnisch zumindest im Wesentlichen vollständig oberhalb der Pumpkammer 22b angeordnet ist. Die Haushaltsgerätevorrichtung 18b weist ein Aufnahmeeinheit 46b für die Zubereitungseinheiten auf.

Die Durchflussbegrenzungseinheit 24b weist einen Durchflusswiderstand auf, dem ein Wert eines Durchströmwiderstands entspricht, der größer ist als ein Wert für den Durchströmwiderstand von wenigstens 50 % der Zubereitungseinheitenvarianten 12b, 14b, 16b. Die Durchflussbegrenzungseinheit 24b weist analog zu dem vorhergehenden Ausführungsbeispiel einen Durchflusswiderstand auf, dem ein Wert eines Durchströmwiderstands entspricht, der größer ist als ein Wert für den Durchströmwiderstand von wenigstens 95 % der Zubereitungseinheitenvarianten 12b, 14b, 16b.

Die Schwingkolbenpumpe 20b ist zur Förderung von Flüssigkeit, die zur Zubereitung einer Getränkeportion vorgesehen ist, unter einem Druck von wenigstens 8 bar vorgesehen. Die Schwingkolbenpumpe 20b weist einen wesentlichen Arbeitsbereich von 8 bar bis 15 bar auf. Die Schwingkolbenpumpe 20b ist analog zu dem vorhergehenden Ausführungsbeispiel ausgebildet. Die Schwingkolbenpumpe 20b umfasst einen Magnetaktor mit einer Magnetspule 56b und mit einem Spulengehäuse 58b. Die Schwingkolbenpumpe 20b umfasst einen Arbeitskolben 60b. Der Magnetaktor ist dazu vorgesehen, ein Magnetfeld zu einem Antrieb des Arbeitskolbens 60b zu erzeugen.

Die Schwingkolbenpumpe 20b weist zwei Anschlusselemente 62b, 64b auf. Ein erstes der Anschlusselemente 62b ist als ein Einlasselement 26b ausgebildet und zu einem Anschluss der Schwingkolbenpumpe 20b an die Zuführleitung 40b vorgesehen. Das erste Anschlusselement 64b weist einen Anschlussstutzen 66b zu einem Anschluss an die Zuführleitung 40b auf. Ein weiteres der Anschlusselemente 64b ist als ein Auslasselement ausgebildet und weist eine Anschlusskupplung auf.

Die Schwingkolbenpumpe 20b umfasst zwei in einander entgegengesetzte Richtungen auf den Arbeitskolben 60b wirkende Federelemente 68b, 70b. Der Arbeitskolben 60b ist schwimmend zwischen den beiden Federelementen 68b, 70b gelagert. Der Arbeitskolben 60b ist zumindest im Wesentlichen ununterbrochen mit beiden Federelementen 68b, 70b in Kontakt. Eines der Federelemente 68b ist als eine Pumpfeder ausgebildet. Das als Pumpfeder ausgebildete Federelement 68b ist dazu vorgesehen, den Arbeitskolben 60b bei einem Druckhub anzutreiben. Das Federelement 68b ist als eine Schraubendruckfeder ausgebildet. Das weitere der Federelemente 70b ist als ein Dämpfungselement ausgebildet. Das weitere der Federelemente 70b ist in dem vorliegenden Ausführungsbeispiel als eine Schraubenfeder ausgebildet.

In der Pumpkammer 22b der Schwingkolbenpumpe 20b ist der Arbeitskolben 60b axial beweglich geführt. Die Pumpkammer 22b weist eine Pumpkammerwand auf, die als eine Kolbenführung ausgebildet ist. Die Pumpkammer 22b durchsetzt das Spulengehäuse 58b mit der Magnetspule 56b. Die Magnetspule 56b ist dazu vorgesehen, ein Magnetfeld zu erzeugen, das teilweise die Pumpkammer 22b durchsetzt. Zur Lenkung des Magnetfeldes umfasst die Schwingkolbenpumpe 20b einen Eisenkreis, welcher die Magnetspule 56b teilweise umgibt. Der Eisenkreis umfasst im Bereich der Pumpkammer 22b einen magnetisch isolierenden Spalt, welcher den Eisenkreis unterbricht. In dem magnetisch isolierenden Spalt ist in dem vorliegenden Ausführungsbeispiel ein Distanzring 72b angeordnet, der eine axiale Erstreckung von zumindest im Wesentlichen 6,5 mm aufweist. Der Eisenkreis umfasst zwei Polhülsenelemente 74b, 76b, zwischen deren Enden der magnetisch isolierende Spalt angeordnet ist.

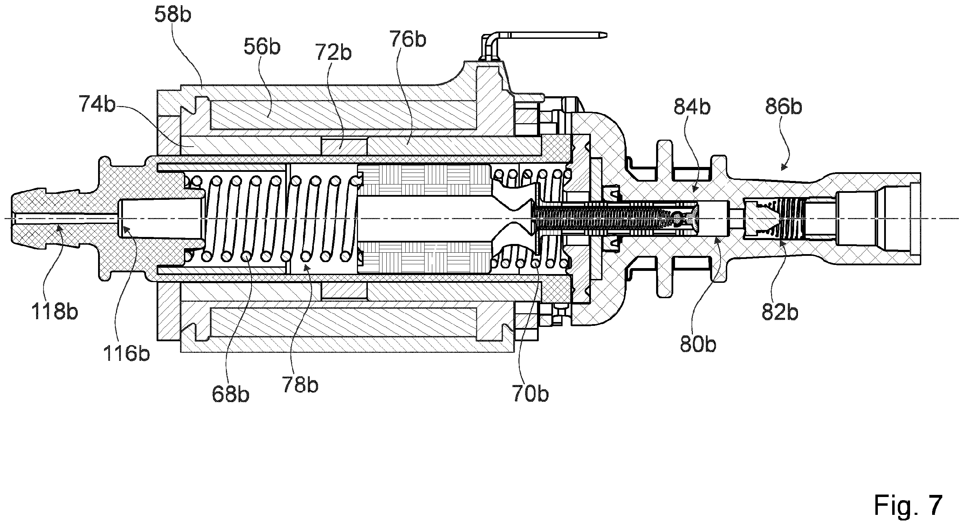

Die Pumpkammer 22b umfasst bei montiertem Arbeitskolben 60b eine Vorkammer 78b, eine Druckkammer 80b und eine Auslasskammer 82b (vgl. Figur 7). Der Arbeitskolben 60b umfasst ein Kolbenventil 84b, das strömungstechnisch zwischen der Vorkammer 78b und der Druckkammer 80b angeordnet ist. Die Schwingkolbenpumpe 20b umfasst ein Auslassventil 86b, das in der Auslasskammer 82b angeordnet ist. Die Auslasskammer 82b wird von dem weiteren Anschlusselement 64b ausgebildet. Das Auslassventil 86b ist strömungstechnisch zwischen der Druckkammer 80b und der Auslasskammer 82b der Schwingkolbenpumpe 20b angeordnet. Für 95 % der Zubereitungseinheitenvarianten 12b, 14b, 16b weist der Abgabevolumenstrom bei einem Betrieb der Haushaltsgerätevorrichtung 18b einen zumindest im Wesentlichen gleichen Wert auf. Die Durchflussbegrenzungseinheit 24b ist dazu vorgesehen, in dem wesentlichen Arbeitsbereich der Schwingkolbenpumpe 20b einen konstanten Abgabevolumenstrom zu erzielen.

Die Durchflussbegrenzungseinheit 24b bewirkt in zumindest einem Betriebszustand bei einem Volumenstrom von zumindest im Wesentlichen 200 ml/min einen Druckabfall, der einem Staudruck auf einer Druckseite von wenigstens 12 bar entspricht. Die Schwingkolbenpumpe 20b ist auf einen Staudruck von zumindest im Wesentlichen 8 bar ausgelegt und die Durchflussbegrenzungseinheit 24b weist einen effektiven Durchflussquerschnitt von weniger als 0,54 mm² auf. Im Unterschied zu dem vorhergehenden Ausführungsbeispiel weist die Durchflussbegrenzungseinheit 24b genau eine Durchflussöffnung 116b auf, die dazu vorgesehen ist, einen gesamten Flüssigkeitsstrom durch die Durchflussbegrenzungseinheit 24b aufzunehmen. Die Durchflussöffnung 116b weist ein kreisförmiges Querschnittsprofil auf. Die Durchflussöffnung 116b weist an dem kreisförmigen Querschnittsprofil einen Durchmesser von zumindest im Wesentlichen 0,83 mm auf. Es ist denkbar, dass das Querschnittsprofil eine von einer Kreisform abweichende Form aufweist, und beispielsweise als ein elliptisches Querschnittsprofil oder ein Querschnittsprofil in Form eines Polygons, insbesondere eines Rechtecks ausgebildet ist. Es ist denkbar, dass die Durchflussbegrenzungseinheit 24b eine Mehrzahl von Durchflussöffnungen aufweist, die dazu vorgesehen sind, den Flüssigkeitsstrom durch die Durchflussbegrenzungseinheit 24b aufzunehmen.

Im Unterschied zu dem vorhergehenden Ausführungsbeispiel ist das als Einlasselement 26b ausgebildete Anschlusselement 62b der Schwingkolbenpumpe 20b zumindest teilweise einstückig mit der Durchflussbegrenzungseinheit 24b ausgebildet. Das als Einlasselement 26b ausgebildete Anschlusselement 62b weist einen Einströmkanal 118b auf, der strömungstechnisch oberhalb der Pumpkammer 22b angeordnet ist. Der Einströmkanal 118b ist strömungstechnisch vor der Pumpkammer 22b angeordnet. Der Einströmkanal 118b bildet die Durchflussöffnung 116b aus. In einer alternativen Ausgestaltung kann das Anschlusselement 62b zumindest eine Blende aufweisen, welche die Durchflussöffnung 116b ausbildet.

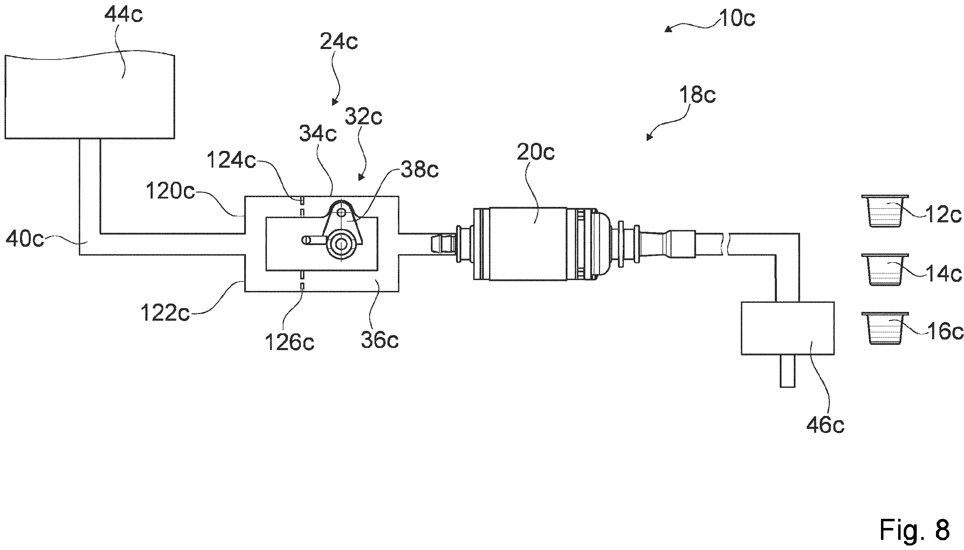

Figur 8 zeigt ein weiteres Ausführungsbeispiel des Getränkezubereitungssystems 10c. Das Getränkezubereitungssystem 10c ist analog zu den vorhergehenden Ausführungsbeispielen als ein Getränkeautomatensystem ausgebildet. Das Getränkezubereitungssystem 10c weist eine Haushaltsgerätevorrichtung 18c auf. Die Haushaltsgerätevorrichtung 18c ist in dem vorliegenden Ausführungsbeispiel als ein Kapselkaffeeautomat ausgebildet. Die Haushaltsgerätevorrichtung 18c ist dazu vorgesehen, Getränkeportionen zuzubereiten und auszugeben. Die Haushaltsgerätevorrichtung 18c ist zu einer portionsweisen Ausgabe von Getränken vorgesehen.

Das Getränkezubereitungssystem 10c weist eine Mehrzahl von Zubereitungseinheitenvarianten 12c, 14c, 16c auf. Die Haushaltsgerätevorrichtung 18c ist dazu vorgesehen, zur Zubereitung einer Getränkeportion jeweils einen Inhalt einer Zubereitungseinheit aufzubrühen. Die Zubereitungseinheitenvarianten 12c, 14c, 16c weisen unterschiedliche Werte innerhalb eines Wertebereichs für einen Durchströmwiderstand auf.

Die Haushaltsgerätevorrichtung 18c weist einen Flüssigkeitsvorratsbehälter 44c auf, der Flüssigkeit speichert, die für die Zubereitung der Getränkeportionen vorgesehen ist. Die Haushaltsgerätevorrichtung 18c weist eine Schwingkolbenpumpe 20c mit einer Pumpkammer auf. Die Haushaltsgerätevorrichtung 18c weist eine Zuführleitung 40c auf, die strömungstechnisch zwischen dem Flüssigkeitsvorratsbehälter 44c und der Schwingkolbenpumpe 20c angeordnet ist. Die Haushaltsgerätevorrichtung 18c weist eine Durchflussbegrenzungseinheit 24c auf, die strömungstechnisch zumindest im Wesentlichen vollständig oberhalb der Pumpkammer angeordnet ist. Die Haushaltsgerätevorrichtung 18c weist ein Aufnahmeeinheit 46c für die Zubereitungseinheiten auf.

Die Durchflussbegrenzungseinheit 24c weist im Unterschied zu dem vorhergehenden Ausführungsbeispiel einen einstellbaren Durchflusswiderstand auf, mit zumindest zwei Werten denen jeweils ein Wert eines Durchströmwiderstands entspricht, der größer ist als ein Wert für den Durchströmwiderstand von wenigstens 95 % der Zubereitungseinheitenvarianten 12c, 14c, 16c.

Die Schwingkolbenpumpe 20c der Haushaltsgerätevorrichtung 18c ist zur Förderung von Flüssigkeit, die zur Zubereitung einer Getränkeportion vorgesehen ist, unter einem Druck von wenigstens 8 bar vorgesehen. Die Schwingkolbenpumpe 20c weist einen wesentlichen Arbeitsbereich von 8 bar bis 15 bar auf. Die Schwingkolbenpumpe 20c ist analog zu den vorhergehenden Ausführungsbeispielen ausgebildet.

In dem vorliegenden Ausführungsbeispiel weist die Durchflussbegrenzungseinheit 24c zwei Strömungspfade 120c, 122c auf, die bei einem Betrieb der Haushaltsgerätevorrichtung 18c alternativ oder gleichzeitig von Flüssigkeit durchströmt werden. Ein erster der Strömungspfade 120c weist eine erste Blende 124c auf und ein weiterer der Strömungspfade 122c weist eine weitere Blende 126c auf. Die Blenden 124c, 126c weisen jeweils eine Durchflussöffnung auf. Die Durchflussöffnungen der Blenden 124c, 126c weisen einen unterschiedlichen Durchmesser auf. Beispielsweise weist die Durchflussöffnung der ersten Blende 124c einen Durchmesser von 1,2 mm und die Durchflussöffnung der weiteren Blende 126c weist einen Durchmesser von 0,8 mm auf.

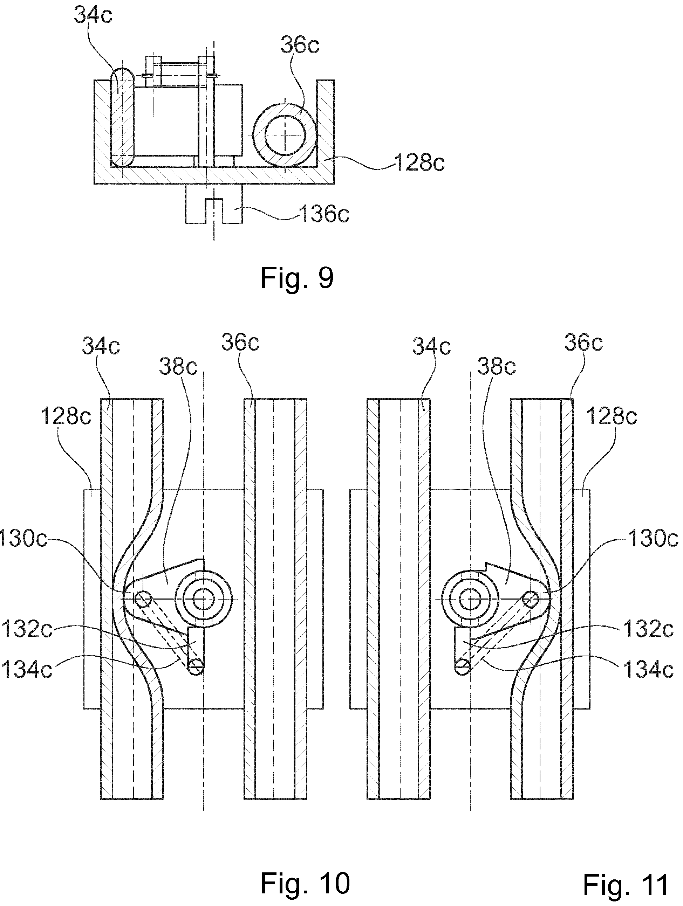

Im Unterschied zu den vorhergehenden Ausführungsbeispielen weist die Durchflussbegrenzungseinheit 24c zumindest eine Stelleinheit 32c zum Einstellen eines effektiven Durchflussquerschnitts auf. Die Stelleinheit 32c ist in dem vorliegenden Ausführungsbeispiel als eine Quetschhahneinheit ausgebildet. Die Stelleinheit 32c weist ein trogförmiges Führungselement 128c auf, das einen zumindest im Wesentlichen U-förmigen Querschnitt aufweist (vgl. Figur 9). Die Stelleinheit 32c weist zwei deformierbare Schlauchabschnitte auf, die jeweils als ein Quetschschlauch 34c, 36c ausgebildet sind. Die erste Blende 124c ist strömungstechnisch zwischen einem ersten der Quetschschläuche 34c und der Schwingkolbenpumpe 20c angeordnet. Die weitere Blende 126c ist strömungstechnisch zwischen einem weiteren der Quetschschläuche 36c und der Schwingkolbenpumpe 20c angeordnet.

In einem montierten Zustand sind die Quetschschläuche 36c parallel zu einer Trogachse in dem Führungselement 128c angeordnet. Die Stelleinheit 32c weist zumindest ein Stellelement 38c auf, das dazu vorgesehen ist, alternativ mit jeweils einem der Quetschschläuche 34c, 36c zusammenzuwirken. Es ist denkbar, dass die Stelleinheit 32c in einer alternativen Ausgestaltung eine Mehrzahl von Stellelementen, insbesondere zwei Stellelemente aufweist, die jeweils dazu vorgesehen sind, lediglich mit einem der Quetschschläuche 34c, 36c zusammenzuwirken. Das Stellelement 38c ist räumlich zwischen den Quetschschläuchen 34c, 36c angeordnet. Das Stellelement 38c ist drehbar mit dem Führungselement 128c verbunden und weist eine Drehachse auf, die zumindest im Wesentlichen senkrecht zu einer Flussrichtung der Quetschschläuche 34c, 36c angeordnet ist.

Das Stellelement 38c weist eine Nocke 130c auf, die dazu vorgesehen ist, alternativ mit jeweils einem der Quetschschläuche 34c, 36c zusammenzuwirken. Die Stelleinheit 32c weist drei Stellpositionen auf. In einer ersten der Stellpositionen ist die Nocke 130c des Stellelements 38c mit dem ersten Quetschschlauch 34c in Kontakt und presst einander gegenüberliegende Wandungen des Quetschschlauchs 34c aufeinander (vgl. Figur 10). Die Wandungen schließen den ersten Quetschschlauch 34c in der ersten Stellposition des Stellelements 38c im Bereich der Nocke 130c des Stellelements 38c. Die Durchflussbegrenzungseinheit 24c weist in der ersten Stellposition einen Durchflussquerschnitt auf, der dem Durchflussquerschnitt der ersten Blende 124c entspricht. In einer weiteren der Stellpositionen ist die Nocke 130c des Stellelements 38c mit dem weiteren Quetschschlauch 36c in Kontakt und presst einander gegenüberliegende Wandungen des Quetschschlauchs 36c aufeinander (vgl. Figur 11). Die Wandungen schließen den weiteren Quetschschlauch 36c in der weiteren Stellposition des Stellelements 38c im Bereich der Nocke 130c des Stellelements 38c. Die Durchflussbegrenzungseinheit 24c weist in der weiteren Stellposition einen Durchflussquerschnitt auf, der dem Durchflussquerschnitt der weiteren Blende 126c entspricht. In einer dritten der Stellpositionen sind die beiden Quetschschläuche 34c, 36c offen und der effektive Durchflussquerschnitt der Durchflussbegrenzungseinheit 24c entspricht einer Summe des Durchflussquerschnitts der ersten Blende 124c und des Durchflussquerschnitts der weiteren Blende 126c.

Die Stelleinheit 32c weist ein Anschlagelement 132c auf, das dazu vorgesehen ist, eine Drehbewegung des Stellelements 38c zu begrenzen. Das Anschlagelement 132c wirkt in der ersten Stellposition mit einer ersten Anschlagkante des Stellelements 38c zusammen. Das Anschlagelement 132c wirkt in der weiteren Stellposition mit einer weiteren Anschlagkante des Stellelements 38c zusammen. Die Stelleinheit 32c weist ein Spannelement 134c auf. Das Spannelement 134c ist dazu vorgesehen, das Stellelement 38c in der ersten Stellposition stabil zu halten. Das Spannelement 134c ist dazu vorgesehen, das Stellelement 38c in der weiteren Stellposition stabil zu halten. Das Spannelement 134c ist dazu vorgesehen, das Stellelement 38c in der dritten Stellposition metastabil zu halten. In dem vorliegenden Ausführungsbeispiel ist das Spannelement 134c als eine Schraubenzugfeder ausgebildet.

Die Stelleinheit 32c weist ein Koppelelement 136c auf, das zu einer mechanischen Kopplung mit einem nicht näher dargestellten Einstellknopf vorgesehen ist. Die Stelleinheit 32c weist ein Achselement auf, das durch das Führungselement 128c hindurchgeführt ist. Das Achselement verbindet in einem montierten Zustand das Koppelelement 136c drehfest mit dem Stellelement 38c.

### Bezugszeichen

- 10: Getränkezubereitungssystem
- 12: Zubereitungseinheitenvariante
- 14: Zubereitungseinheitenvariante
- 16: Zubereitungseinheitenvariante
- 18: Haushaltsgerätevorrichtung
- 20: Schwingkolbenpumpe
- 22: Pumpkammer
- 24: Durchflussbegrenzungseinheit
- 26: Einlasselement
- 28: Mengenbegrenzer
- 30: Drosselelement
- 32: Stelleinheit
- 34: Quetschschlauch
- 36: Quetschschlauch
- 38: Stellelement
- 40: Zuführleitung
- 42: Zuführpfad
- 44: Flüssigkeitsvorratsbehälter
- 46: Aufnahmeeinheit
- 48: Bedieneinheit
- 50: Abstellrost
- 52: Gefäßaufnahme
- 54: Ausgabeeinheit
- 56: Magnetspule
- 58: Spulengehäuse
- 60: Arbeitskolben
- 62: Anschlusselement
- 64: Anschlusselement
- 66: Anschlussstutzen
- 68: Federelement
- 70: Federelement
- 72: Distanzring
- 74: Polhülsenelement
- 76: Polhülsenelement
- 78: Vorkammer
- 80: Druckkammer
- 82: Auslasskammer
- 84: Kolbenventil
- 86: Auslassventil
- 88: Längsachse
- 90: Grundkörper
- 92: Führungszapfen
- 94: Bohrung
- 96: Bohrung
- 98: Bohrung
- 100: Bohrung
- 102: Durchflusskanal
- 104: Durchflusskanal
- 106: Durchflusskanal
- 108: Durchflusskanal
- 110: Durchflussrinne
- 112: Durchflussrinne
- 114: Durchflussrinne
- 116: Durchflussöffnung
- 118: Einströmkanal
- 120: Strömungspfad
- 122: Strömungspfad
- 124: Blende
- 126: Blende
- 128: Führungselement
- 130: Nocke
- 132: Anschlagelement
- 134: Spannelement
- 136: Koppelelement

## Patentansprüche

1. Haushaltsgerätevorrichtung, insbesondere Getränkeautomatenvorrichtung, mit einer Schwingkolbenpumpe (20a; 20b; 20c), die eine Pumpkammer (22a) aufweist, und mit zumindest einer Durchflussbegrenzungseinheit (24a; 24b; 24c), die strömungstechnisch zumindest im Wesentlichen vor der Pumpkammer angeordnet ist, wobei die Durchflussbegrenzungseinheit (24a; 24b; 24c) dazu vorgesehen ist, zumindest in einem wesentlichen Arbeitsbereich einen zumindest im Wesentlichen konstanten Abgabevolumenstrom zu erzielen
**dadurch gekennzeichnet, dass**
die Schwingkolbenpumpe (20a; 20b; 20c) auf einen Staudruck von zumindest im Wesentlichen 4 bar ausgelegt ist und die Durchflussbegrenzungseinheit (24a; 24b; 24c) einen effektiven Durchflussquerschnitt von weniger als 0,95 mm² aufweist oder dass die Schwingkolbenpumpe (20a; 20b; 20c) auf einen Staudruck von zumindest im Wesentlichen 7 bar ausgelegt ist und die Durchflussbegrenzungseinheit (24a; 24b; 24c) einen effektiven Durchflussquerschnitt von weniger als 0,59 mm² aufweist oder dass die Schwingkolbenpumpe (20a; 20b; 20c) auf einen Staudruck von zumindest im Wesentlichen 8 bar ausgelegt ist und die Durchflussbegrenzungseinheit (24a; 24b; 24c) einen effektiven Durchflussquerschnitt von weniger als 0,54 mm² aufweist oder dass die Schwingkolbenpumpe (20a; 20b; 20c) auf einen Staudruck von zumindest im Wesentlichen 12 bar ausgelegt ist und die Durchflussbegrenzungseinheit (24a; 24b; 24c) einen effektiven Durchflussquerschnitt von weniger als 0,40 mm² aufweist.

2. Haushaltsgerätevorrichtung nach Anspruch 1, **dadurch gekennzeichnet, dass** die Durchflussbegrenzungseinheit (24a; 24b; 24c) in zumindest einem Betriebszustand bei einem Volumenstrom von zumindest im Wesentlichen 310 ml/min einen Druckabfall bewirkt, der einem Staudruck auf einer Druckseite von wenigstens 1 bar entspricht.

3. Haushaltsgerätevorrichtung nach Anspruch 1 oder 2, **dadurch gekennzeichnet, dass** die Schwingkolbenpumpe (20b) ein Einlasselement (26b) aufweist, das zumindest teilweise einstückig mit der Durchflussbegrenzungseinheit (24b) ausgebildet ist.

4. Haushaltsgerätevorrichtung nach einem der Ansprüche 1 bis 3, **dadurch gekennzeichnet, dass** die Durchflussbegrenzungseinheit (24a) zumindest einen Mengenbegrenzer (28a) mit einer Mehrzahl von Durchflusskanälen (102a, 104a, 106a) aufweist.

5. Haushaltsgerätevorrichtung nach einem der Ansprüche 1 bis 4, **dadurch gekennzeichnet, dass** die Durchflussbegrenzungseinheit (24c) zumindest eine Stelleinheit (32c) zum Einstellen eines effektiven Durchflussquerschnitts aufweist.

6. Haushaltsgerätevorrichtung nach Anspruch 5, **dadurch gekennzeichnet, dass** die Stelleinheit (32c) zumindest zwei Quetschschläuche (34c, 36c) und zumindest ein Stellelement (38c) aufweist, das dazu vorgesehen ist, alternativ mit jeweils einem der Quetschschläuche (34c, 36c) zusammenzuwirken.

7. Verfahren zum Betrieb einer Haushaltsgerätevorrichtung (18a; 18b; 18c) nach einem der Ansprüche 1 bis 6, bei dem die strömungstechnisch vor der Pumpkammer (22a) der Schwingkolbenpumpe (20a; 20b; 20c) angeordnete Durchflussbegrenzungseinheit (24a; 24b; 24c) einen Abgabevolumenstrom durch die Pumpkammer (22a) zumindest im Wesentlichen zumindest in einem wesentlichen Arbeitsbereich konstant hält.

## Claims

1. Household appliance device, in particular beverage machine device, with an oscillating armature pump (20a; 20b; 20c) comprising a pump chamber (22a), and with at least one flow-through limiter unit (24a; 24b; 24c) which is arranged fluidically at least substantially upstream of the pump chamber,
wherein the flow-through limiter unit (24a; 24b; 24c) is configured to achieve, at least in an essential work region, an at least substantially constant output volume flow,
**characterised in that** the oscillating armature pump (20a; 20b; 20c) is designed for a back pressure of at least substantially 4 bar and the flow-through limiter unit (24a; 24b; 24c) has an effective flow-through cross-section of less than 0.95 mm²,
or that the oscillating armature pump (20a; 20b; 20c) is designed for a back pressure of at least substantially 7 bar and the flow-through limiter unit (24a; 24b; 24c) has an effective flow-through cross-section of less than 0.59 mm²,
or that the oscillating armature pump (20a; 20b; 20c) is designed for a back pressure of at least substantially 8 bar and the flow-through limiter unit (24a; 24b; 24c) has an effective flow-through cross-section of less than 0.54 mm²,
or that the oscillating armature pump (20a; 20b; 20c) is designed for a back pressure of at least substantially 12 bar and the flow-through limiter unit (24a; 24b; 24c) has an effective flow-through cross-section of less than 0.40 mm².

2. Household appliance device according to claim 1,
**characterised in that** in at least one operation state, with a volume flow of at least substantially 310 ml/min, the flow-through limiter unit (24a; 24b; 24c) produces a pressure drop that corresponds to a back pressure on a pressure side of at least 1 bar.

3. Household appliance device according to claim 1 or 2,
**characterised in that** the oscillating armature pump (20b) comprises an inlet element (26b), which is implemented at least partly integrally with the flow-through limiter unit (24b).

4. Household appliance device according to one of claims 1 to 3,
**characterised in that** the flow-through limiter unit (24a) comprises at least one quantity limiter (28a) with a plurality of flow-through channels (102a, 104a, 106a).

5. Household appliance device according to one of claims 1 to 4,
**characterised in that** the flow-through limiter unit (24c) comprises at least one adjusting unit (32c) for an adjustment of an effective flow-through cross-section.

6. Household appliance device according to claim 5,
**characterised in that** the adjusting unit (32c) comprises at least two collapsible hoses (34c, 36c) and at least one adjusting element (38c), which is configured to act together alternatively with respectively one of the collapsible hoses (34c, 36c).

7. Method for operating a household appliance device according to one of claims 1 to 6,
in which the flow-through limiter unit (24a; 24b; 24c), which is arranged fluidically upstream of the pump chamber (22a) of the oscillating armature pump (20a; 20b; 20c), maintains an output volume flow through the pump chamber (22a) at least substantially constant at least in an essential work region.

## Revendications

1. Dispositif d'appareil ménager, en particulier dispositif de machine à boissons, avec une pompe à armature oscillante (20a ; 20b ; 20c) comprenant une chambre de pompe (22a) et
avec au moins une unité de limiteur de débit (24a ; 24b ; 24c) disposée fluidiquement au moins sensiblement en amont de la chambre de pompe,
où l'unité de limiteur de débit (24a ; 24b ; 24c) est prévue à achever, au moins dans une zone de travail essentielle, un débit volumétrique de sortie au moins sensiblement constant,
**caractérisé en ce que** la pompe à armature oscillante (20a ; 20b ; 20c) est conçue pour une pression de refoulement d'au moins sensiblement 4 bar et l'unité de limiteur de débit (24a ; 24b ; 24c) présente une section de passage effective de moins de 0,95 mm²,
ou que la pompe à armature oscillante (20a ; 20b ; 20c) est conçue pour une pression de refoulement d'au moins sensiblement 7 bar et l'unité de limiteur de débit (24a ; 24b ; 24c) présente une section de passage effective de moins de 0,59 mm²,
ou que la pompe à armature oscillante (20a ; 20b ; 20c) est conçue pour une pression de refoulement d'au moins sensiblement 8 bar et l'unité de limiteur de débit (24a ; 24b ; 24c) présente une section de passage effective de moins de 0,54 mm²,
ou que la pompe à armature oscillante (20a ; 20b ; 20c) est conçue pour une pression de refoulement d'au moins sensiblement 12 bar et l'unité de limiteur de débit (24a ; 24b ; 24c) présente une section de passage effective de moins de 0,40 mm².

2. Dispositif d'appareil ménager selon la revendication 1,
**caractérisé en ce qu'**en au moins un état d'opération, avec un débit volumétrique d'au moins sensiblement 310ml/min, l'unité de limiteur de débit (24a ; 24b ; 24c) induit une dépressurisation correspondante à une pression de refoulement côté de pression d'au moins 1 bar.

3. Dispositif d'appareil ménager selon la revendication 1 ou 2,
**caractérisé en ce que** la pompe à armature oscillante (20b) comporte un élément d'entrée (26b) réalisé au moins partiellement intégralement avec l'unité de limiteur de débit (24b).

4. Dispositif d'appareil ménager selon l'une des revendications 1 à 3,
**caractérisé en ce que** l'unité de limiteur de débit (24a) comporte au moins un limiteur quantitatif (28a) ayant une pluralité de canaux de passage (102a, 104a, 106a).

5. Dispositif d'appareil ménager selon l'une des revendications 1 à 4,
**caractérisé en ce que** l'unité de limiteur de débit (24c) comporte au moins une unité de réglage (32c) pour un réglage d'une section de passage effective.

6. Dispositif d'appareil ménager selon la revendication 5,
**caractérisé en ce que** l'unité de réglage (32c) comporte au moins deux tuyaux à écrasement (34c, 36c) et au moins un élément de réglage (38c), qui est prévu à agir conjointement avec respectivement un des tuyaux de réglage (34c, 36c) en alternative.

7. Procédé d'opération d'un dispositif d'appareil ménager (18a ; 18b ; 18c) selon l'une des revendications 1 à 6, dans lequel l'unité de limiteur de débit (24a ; 24b ; 24c), qui est disposé fluidiquement en amont de la chambre de pompe (22a) de la pompe à armature oscillante (20a ; 20b ; 20c), maintient un débit volumétrique au moins sensiblement constant à travers la chambre de pompe (22a), au moins dans une zone de travail essentielle.
